Europäisches Patentamt

European Patent Office

Office européen des brevets

(11) Numéro de publication : **0 365 448 B1**

## (12) FASCICULE DE BREVET EUROPEEN

(45) Date de publication du fascicule du brevet :
**04.08.93 Bulletin 93/31**

(51) Int. Cl.⁵ : **G11B 5/71,** G11B 5/702

(21) Numéro de dépôt : **89420400.7**

(22) Date de dépôt : **17.10.89**

(54) **Milieu d'enregistrement magnétique.**

Jointe à la demande no. 89912248.5/0440716
(numéro de dépôt/numéro de publication de la
demande européenne) par décision du
10.09.91.

(30) Priorité : **18.10.88 FR 8814219**

(43) Date de publication de la demande :
**25.04.90 Bulletin 90/17**

(45) Mention de la délivrance du brevet :
**04.08.93 Bulletin 93/31**

(84) Etats contractants désignés :
**AT BE CH DE ES FR GB IT LI LU NL SE**

(56) Documents cités :
**DE-A- 3 529 756**
**DE-B- 1 269 660**
**FR-A- 2 605 623**
**US-A- 4 391 851**

(73) Titulaire : **KODAK-PATHE**
**26, rue Villiot**
**F-75594 Paris Cedex 12 (FR)**

(72) Inventeur : **Laine, Antoine Marie Bernard**
**Kodak-Pathé Zone Industrielle**
**F-71102 Chalon sur Saône Cédex (FR)**
Inventeur : **Cadot, Bernard René Maurice**
**Kodak-Pathé Zone Industrielle**
**F-71102 Chalon sur Saône Cédex (FR)**

(74) Mandataire : **Buff, Michel**
**Kodak-Pathé Département des Brevets et**
**Licences CRT Centre de Recherches et de**
**Technologie Zone Industrielle**
**F-71102 Chalon sur Saône Cédex (FR)**

EP 0 365 448 B1

## Description

La présente invention concerne un milieu d'enregistrement magnétique comprenant un liant spécifique, des particules magnétiques et un lubrifiant ; ce milieu possède des caractéristiques spécifiques de dureté, de cohésion, de rugosité superficielle, de résistance à l'abrasion et aux rayures, d'abrasivité et de glissement le rendant particulièrement apte, sans surcouche ni protection externe, à des utilisations sur des supports semirigides tels que des disques ou des cartes.

La plupart des milieux d'enregistrement magnétique comportent soit une surcouche afin de protéger la couche magnétique lors des manipulations, des rayures, abrasions et autres agressions de l'environnement, soit une protection par pochettes ou cassettes.

Si l'on souhaite s'affranchir d'une protection externe et réaliser un enregistrement haute densité, on doit utiliser une surcouche pour garantir la conservation totale des informations.

Cependant, la présence d'une surcouche augmente l'espacement tête/couche, qu'il faudrait au contraire réduire lorsqu'on souhaite réaliser un enregistrement de haute densité.

Les deux objectifs, d'une part de protection physique du milieu d'enregistrement, et partant, de l'information qui y est enregistrée, et d'autre part, de diminution de l'espacement tête/couche, sont contradictoires.

La suppression de la surcouche, souhaitable, n'est donc concevable qu'à la condition d'utiliser un milieu magnétique qui ait en plus les propriétés requises pour la surcouche. En d'autres termes, ce milieu doit être superficiellement assez dur pour résister aux rayures et autres agressions de l'environnement, avoir une assez grande cohésion pour résister à l'usure et à l'arrachement, ne pas être cassant ou se fissurer ; il doit résister aux intempéries, aux solvants, aux températures d'utilisation du support magnétique, ainsi qu'à celles des traitements éventuels de finition de ces supports ; il doit enfin engendrer un coefficient de frottement superficiel réduit entre lui-même et la tête d'écriture/lecture, afin de diminuer l'usure de l'un et de l'autre, et avoir de bonnes propriétés de glissement. Ceci implique le choix d'un liant approprié pour le milieu magnétique et la possibilité d'incorporer un lubrifiant dans ce liant.

Des liants couramment utilisés pour les milieux d'enregistrement magnétique sont formés d'un mélange (a) d'un polyuréthanne élastomère de haut poids moléculaire obtenu par réaction d'un polyol avec des isocyanates et contenant des allongeurs de chaîne qui confèrent au polyuréthanne son élasticité et (b) d'un copolymère vinylique à base de chlorure de vinyle contenant des groupes OH réticulables, qui sert à la fois d'agent de dispersion pour les particules magnétiques et participe à la réticulation avec des isocyanates. Cet ensemble confère à la couche la rigidité souhaitée.

Ces sortes de liants ne sont cependant pas assez durs pour une utilisation sans surcouche ni protection, car ils ne résisteraient pas suffisamment aux rayures et autres agressions de l'environnement pour garantir la conservation totale des informations.

Une autre sorte de liant pour milieu d'enregistrement magnétique, décrit au brevet français 1020808, comprend un polyuréthanne non élastomère, réticulé par un prépolymère d'isocyanate contenant au moins 3 groupes fonctionnels de façon à obtenir un réseau tridimensionnel. Ce type de liant est trop dur et a tendance à se casser et à se fendiller. Le brevet français 1311588 décrit le liant du brevet français 1020808 associé à un copolymère à base de chlorure de vinyle fortement polymérisé qui sert ici de composé élastomère ; il ne contient pas dans ce cas de groupe OH réticulable et il est utilisé à raison de 10 à 20% dans le mélange.

Ce type de liants manque aussi de résistance et ne satisfait pas aux exigences mentionnées ci-dessus.

Le brevet des EUA n° 4 391 851 décrit un procédé pour produire un milieu magnétique dont le liant est un mélange de polyol, de poly-isocyanate et de nitrocellulose. Ce document ne décrit ni ne suggère qu'on puisse obtenir ainsi des milieux magnétiques ayant des propriétés aussi remarquables que ceux de la présente invention.

On a trouvé selon l'invention un milieu magnétique ayant les propriétés requises, comprenant un liant spécifique.

La présente invention a pour objet un milieu magnétique comprenant des particules magnétiques et un liant formé d'un polyuréthanne tridimensionnel, réticulé, et il est caractérisé en ce que le polyuréthanne tridimensionnel, réticulé, est formé à partir d'un polyol ramifié comprenant au moins 8% en poids de groupes OH, ayant un poids moléculaire moyen inférieur à 4000, et d'un prépolymère d'isocyanate comprenant au moins 3 fonctions isocyanate.

On peut utiliser comme polyol des polyester-polyols aromatiques ou aliphatiques, ou des polyéther-polyols.

Les polyester-polyols sont des composés comprenant des groupes hydroxyle préparés à partir d'acides dicarboxyliques ou de dérivés de ces acides tels que leurs anhydrides, tels que l'acide adipique, les acides téréphtalique, phtalique, isophtalique, tétrahydrophtalique, hexahydrophtalique, l'acide maléique, et d'alcools polyfonctionnels tels que les glycols, le glycérol, l'hexanediol, l'hexanetriol, le néopentylglycol, le triméthylol-

2

propane, le pentaérythrol, etc.

Les polyéther-polyols sont aussi des composés contenant des groupes hydroxyle préparés à partir d'oxydes d'alkylène et des mêmes alcools que ceux décrits ci-dessus pour les polyesters.

La quantité de groupes -COOH provenant des acides et de groupes -OH provenant des alcools est telle que le rapport OH/COOH est supérieur à 1. Par condensation, tous les groupes COOH réagissent, alors qu'il reste des groupes hydroxyle libres. Les polyols utilisés selon l'invention comprennent au moins 8 % en poids de groupes OH. De préférence, l'acide dicarboxylique est un acide phtalique hydrogéné, éventuellement en mélange avec d'autres acides, et l'alcool polyfonctionnel est le triméthylopropane, éventuellement en mélange avec d'autres alcools.

L'expression "prépolymère d'isocyanate", utilisée habituellement dans la chimie des polyuréthannes, désigne un composé avec au moins trois fonctions isocyanate, c'est-à-dire une fonctionnalité au moins de trois. De tels composés peuvent être obtenus par exemple, à partir de 3 moles d'un diisocyanate aliphatique ou aromatique et 1 mole d'un alcool trivalent, tel que le glycérol, l'hexanetriol ou le triméthylol propane.

Les quantités respectives de polyol et d'isocyanate sont telles que le rapport NCO/OH total est supérieur à 0,9, et de préférence égal ou supérieur à 1. L'expression : OH total, signifie que si le milieu magnétique comprend une autre source de groupes OH que le polyol, il faut en tenir compte pour le calcul de la teneur en prépolymère d'isocyanate, afin que le milieu soit entièrement réticulé.

Sans être lié par des considérations théoriques, on pense que la polyfonctionnalité de l'isocyanate, le polyol spécifique et la stoechiométrie utilisés contribuent à augmenter le nombre de liaisons de réticulation du polyuréthanne, ce qui permet d'obtenir un liant qui ait les propriétés d'une laque filmogène, c'est-à-dire qui soit à la fois dur et rigide, mais non cassant.

Le milieu d'enregistrement selon l'invention peut comprendre toutes particules magnétiques connues, dopées ou non, telles que les oxydes métalliques, comme les oxydes de fer, de chrome, les particules métalliques telles que des particules de fer, des hexaferrites de Ba ou de Sr, etc.

Dans un mode de réalisation, les particules magnétiques sont des particules d'hexaferrite de baryum ou de strontium ayant un champ coercitif supérieur à 4000 Oe (300 kA/m) et de préférence supérieur à 5000 Oe (400 kA/m) une aimantation à saturation supérieure à 55 emu/g et de préférence supérieure à 60 emu/g et un rapport de la répartition des champs de commutation au champ coercitif (SFD/Hc) inférieur à 0,45 et de préférence inférieur à 0,40.

Un procédé de préparation de telles particules est décrit au brevet français 2637888 intitulé "Procédé de préparation de particules magnétiques d'hexaferrites, particules obtenues et produit les contenant".

Le SFD caractérise la largeur de la distribution des champs de commutation. A partir du cycle d'hystérésis (flux magnétique M en fonction du champ magnétisant H), on trace la courbe dM/dH en fonction de H, (dérivée du cycle d'hystérésis) et on calcule la largeur à mi-hauteur 4H du pic observé quand H = Hc ; cette valeur est appelée SFD. On divise cette valeur de SFD par le champ coercitif des particules, ce qui donne le rapport sans dimension SFD/Hc.

L'aimantation et le champ coercitif sont mesurés au VSM (Vibrating Sample Magnetometer) sous un champ magnétisant maximum de 20 000 Oe (1590 kA/m).

Le milieu d'enregistrement selon l'invention peut contenir les additifs couramment utilisés dans un tel milieu.

Il peut contenir en particulier des lubrifiants couramment utilisés dans les compositions magnétiques, afin de diminuer le coefficient de frottement entre la couche et la tête, de diminuer l'usure de l'une et de l'autre et d'améliorer les propriétés de glissement. De tels lubrifiants comprennent, par exemple, des fines particules de graphite ou de sulfure de molybdène ou de tungstène, des huiles de silicone, des hydrocarbures aliphatiques insaturés, des esters d'acide gras et de monoalcools, des esters carboniques tels que ceux décrits au brevet français 2 094 663, des hydrocarbures fluorés ou des fines particules de polymère tel que le polyéthylène, le polypropylène, le polytétrafluoroéthylène, etc.

Cependant dans des modes de réalisation tels que des cartes ou des disques, dans lesquels il est particulièrement intéressant de ne pas utiliser de surcouche, d'une part, et d'autre part dans lesquels le milieu magnétique doit pouvoir supporter des températures d'utilisation ou de traitement élevées, par exemple supérieures à 100°C, et même à 150°C, on utilise des lubrifiants solides, dans lesquels au moins 90 % et de préférence au moins 99 % des particules ont une dimension égale ou inférieure à 3 µm, à raison de moins de 2 % en masse par rapport à la masse des particules magnétiques.

En effet, les lubrifiants liquides ont tendance à exsuder du milieu magnétique par élévation de température, et en particulier quand le traitement final du support magnétique exige des températures élevées.

On peut utiliser comme lubrifiant solide de fines particules de graphite, de sulfure de molybdène ou de tungstène, de polyéthylène. De préférence on utilise du polytétrafluoroéthylène (PTFE). Le PTFE est vendu sous forme de poudres par différents fabriquants. On peut en trouver par exemple chez Du Pont de Nemours sous la dénomination commerciale de Vydax.

Il est important que le lubrifiant solide soit compatible avec les autres constituants du milieu d'enregistrement, et qu'il ne contienne pas plus de 10% de particules ayant une dimension supérieure à 3 μm et, de préférence pas plus de 1%, d'une part, et d'autre part, que sa teneur dans le milieu magnétique ne dépasse pas 2% par rapport à la masse des particules magnétiques. On peut obtenir une telle répartition en dimension de particules de lubrifiant par tamisage, filtration ou toute autre technique connue.

Sans être lié par des considérations théoriques, on pense que la structure réticulée du liant est telle qu'elle permet d'emprisonner les particules de lubrifiant solide de dimensions inférieures à 3 μm.

Le lubrifiant solide à base de polytétrafluoroéthylène peut être associé à un polymère inerte tel qu'une polyoléfine, par exemple du polyéthylène.

On peut utiliser, en plus du PTFE tel que décrit ci-dessus, des lubrifiants connus tels que les huiles de silicone, en quantité inférieure à 1 partie pour 100 parties de particules magnétiques.

On peut utiliser dans le milieu d'enregistrement magnétique selon l'invention un ou plusieurs agents tensioactifs pour assurer la mouillabilité, la dispersabilité et l'étalement de la dispersion. On peut utiliser, par exemple, un ester d'acide polycarboxylique ou un ester organique complexe d'acide phosphorique, de la lécithine, des acides gras tels que l'acide palmitique ou l'acide oléique, ou des mélanges de ces agents tensio-actifs. On peut utiliser aussi comme agent de dispersion un copolymère vinylique à base de chlorure de vinyle comprenant des groupes OH. Un tel copolymère comprend en général de 70 à 90 % de chlorure de vinyle, les autres monomères étant choisis parmi l'acétate de vinyle, l'alcool polyvinylique, et des esters acryliques ou méthacryliques portant éventuellement des groupes hydroxyle. Dans ce cas, il faut tenir compte des groupes OH du copolymère vinylique, qui doit être lui aussi complètement réticulé dans le réseau tridimensionnel de polyuréthanne et la quantité de prépolymère d'isocyanate doit être ajustée en conséquence.

Dans un mode de réalisation préféré, on utilise un alkylphénoxypolyéthoxyéthyl ester de l'acide phosphorique, à raison de 3 à 8 g pour 100 g de particules magnétiques et un copolymère vinylique à raison de moins de 10 % en masse par rapport au liant total.

En outre, la composition de liants peut comprendre les additifs habituels tels que des poudres abrasives comme $Al_2O_3$ ou $Cr_2O_3$, des pigments, sous forme de poudre fine ou de colloïde, tels que du noir de carbone pour colorer la couche et de la silice pour améliorer la qualité et la stabilité de la dispersion.

Enfin, elle peut éventuellement contenir des agents pour favoriser la réticulation, suivant le liant utilisé et la cinétique que l'on souhaite.

On forme une dispersion de couchage en mélangeant les particules magnétiques, les différents composants du liant, et les additifs, en présence de solvants. On utilise des mélanges solvants connu dans la technique des dispersions magnétiques.

Parmi les solvants utiles, on peu citer des esters tels que l'acétate de méthyle, l'acétate d'éthyle, l'acétate d'isopropyle, le tétrahydrofuranne, des cétones telles que la méthyléthylcétone, la méthylisobutylcétone et la cyclohexanone, le nitrométhane, le nitroéthane, le dichloroéthane, des solvants benzéniques tels que le toluène, etc. Les quantités utiles de solvants peuvent être déterminées par le technicien en fonction des résultats souhaités, des composés particuliers de la dispersion et de l'appareillage utilisé. Des dispersions particulièrement utiles sont décrites dans les exemples.

Comme il est connu dans la technique, on empâte d'abord les particules magnétiques avec l'agent tensioactif et le copolymère vinylique, on broie cette pâte par exemple dans un broyeur à billes, puis on ajoute tous les autres constituants de la formule du milieu magnétique. On obtient une composition de couchage magnétique qu'on applique sur un support de façon connue. La réticulation formant le polyuréthanne a lieu après couchage par tout moyen connu et, en général, en chauffant, avec, comme indiqué ci-dessus un promoteur de réticulation, si nécessaire.

Le milieu magnétique obtenu est très dur ; cette dureté peut être évaluée par le test de rayure décrit ci-dessous. Il possède une excellente cohésion, présente à la fois une résistance élevée à l'usure et une faible abrasivité, et il résiste aux solvants. En général il présente lui-même, sans surcouche, une usure correspondant à une perte de signal électrique égale ou inférieure à 5 % pour 2000 passages, une abrasivité inférieure à 600 μm et une résistance à la rayure inférieure à 1,5 μm. En outre, dans le cas où l'on utilise le PTFE tel que décrit ci-dessus, le milieu magnétique est insensible aux variations de températures comprises entre -20°C et 130°C.

Le milieu d'enregistrement selon l'invention peut être utilisé dans tous les cas où l'on souhaite un milieu rigide ou semi-rigide sans surcouche, par exemple pour des disques ou des cartes.

Dans un mode de réalisation particulier, on utilise le milieu d'enregistrement magnétique selon l'invention dans une carte à mémoire magnétique à grande capacité telle que celle décrite à la demande de brevet français 8814217 intitulée :"Carte à mémoire magnétique à grande capacité et procédé de fabrication".

Les exemples suivants concernent particulièrement une carte comportant un milieu d'enregistrement de haute énergie et haute densité, ayant un champ coercitif compris entre 4500 et 6000 Oe, une aimantation à saturation supérieure à 60 emu/cm³, et de préférence supérieure à 80 emu/cm³, et un rapport de la répartition des champs de commutation au champ coercitif inférieur à 0,50, et de préférence inférieur à 0,30. Comme sur les poudres, l'aimantation et le champ coercitif sont mesurés au VSM sous un champ magnétisant maximum de 20 000 Oe (1590 kA/m). L'invention ne se limite cependant pas à une telle carte.

Les résultats donnés dans les exemples concernent l'usure électrique, l'abrasivité, la rugosité et la résistance à la rayure du milieu d'enregistrement magnétique. Ces paramètres sont mesurés par les tests suivants :

## Test électrique d'usure

Sur un milieu d'enregistrement magnétique, on choisit un certain nombre de pistes réparties uniformément sur l'ensemble de la couche magnétique.

Sur chaque piste on enregistre un signal qu'on relit un nombre de fois déterminé. (Nombre de passages). L'amplitude du signal de lecture est mesurée à l'aide d'un oscilloscope. La perte de signal correspond à la différence entre la première lecture et la dernière, et elle est exprimée en % du signal recueilli à la première lecture.

## Test de rugosité

On déplace le milieu magnétique à mesurer à 40 µm/s sur une distance de 2 mm. A l'aide d'un convertisseur, on mesure le déplacement d'un capteur dont la partie en contact avec le milieu est une bille de 5 µm de rayon. La force appliquée sur cette bille est de 0,03 mN. La tension analogique à la sortie du convertisseur, proportionnelle aux oscillations du capteur, est traitée numériquement à l'aide d'un ordinateur qui calcule les critères de rugosité. On utilisera la rugosité arithmétique moyenne (écart moyen arithmétique du profil par rapport à la ligne moyenne, intégré sur la longueur de base).

## Test d'abrasivité

La méthode utilisée pour évaluer l'abrasivité d'une couche consiste à faire défiler un tore de cuivre de dureté Vickers 52, ayant un diamètre de fil de 1,6 mm et un rayon intérieur de boucle de 8 mm, sur la couche à mesurer, sur une longueur de 5 cm, avec une force d'application constante F=0,6 N et une vitesse de 8 cm/s, 1400 fois aller et retour.

On obtient sur le tore une figure d'abrasion représentée par une pseudo-ellipse dont le grand axe est d'autant plus grand que la couche est plus abrasive. On mesure la longueur du grand axe de cette pseudo-ellipse sur un microscope équipé d'une mire micrométrique. On utilise cette longueur comme paramètre de définition de l'abrasivité.

## Test de rayure

On réalise le test de rayure en faisant passer un diamant sphérique de rayon R = 15 µm sous une charge de 4 g sur la surface du milieu d'enregistrement magnétique.

La résistance à la rayure est exprimée en profondeur de rayure en µm, calculée à partir de la demi-largeur a de l'empreinte générée par le diamant sur la couche, selon la formule :

$$\text{profondeur} = R - R\sqrt{1 - \frac{a^2}{R^2}}$$

On utilise dans les exemples les produits commerciaux suivants :

- Desmophen®, marque commerciale pour un groupe de polyesters et de polyethers réticulables par des isocyanates, vendue par Bayer AG.
- Desmodur®, marque commerciale pour un groupe d'isocyanates et de prépolymères d'isocyanates vendue par Bayer AG.
- Gafac®, marque commerciale pour un groupe d'agents tensioactifs anioniques qui sont des esters organiques complexes de phosphate, vendue par General Aniline and Film Corp.
- Vinnol®, marque commerciale pour des copolymères d'alcool polyvinylique, vendue par Wacker-Chemie Gesellschaft.
- Vydax®, marque commerciale pour des télomères fluorocarbonés, vendue par E.I. Du Pont de Nemours.
- Lexan®, marque commerciale pour des polycarbonates, vendue par General Electric Co.

Les particules d'hexaferrite de baryum utilisées dans tous les exemples sont préparées suivant le procédé du brevet français 2637888. Elles ont une acicularité comprise entre 1,5:1 et 3:1 et une longeur de 0,1 à 0,3 µm. Leur aimantation à saturation est de 62 ± 2 emu/g, leurs champs coercitifs sont compris entre 4700 Oe et 5300 Oe, leur SFD est compris entre 1800 et 2100 Oe et leurs rapports SFD/Hc sont compris entre 0,34 et 0.45.

Les résultats des mesures mécaniques et magnétiques sur les cartes obtenues sont rassemblés au tableau ci-dessous pour tous les exemples.

On observe en outre que les cartes obtenues dans tous les exemples présentent une exellente résistance aux solvants, à la température et aux agressions externes. Des sollicitations en flexions répétées ne génèrent aucun dommage sur la couche magnétique.

Exemple 1

On prépare une dispersion magnétique comprenant :

| | |
|---|---:|
| Particules d'hexaferrite de Ba | 100,0 g |
| Agent tensioactif GAFAC® RE 610 | 7,0 g |
| Vinnol E 22/40 A | 1,0 g |
| $SiO_2$ | 1,0 g |
| $Cr_2O_3$ | 3,0 g |
| $Al_2O_3$ | 6,0 g |
| Noir de carbone | 3,0 g |
| Desmophen® 651 | 15,8 g |
| Desmodur® L | 18,2 g |
| Vydax® AR | 0,4 g |

On ajoute à cette dispersion le mélange de solvants suivant, à raison de 55 parties de dispersion pour 45 parties de mélange de solvants :

Acétate d'éthyle     50 parties
THF                  25 parties
Acétate de méthyle   25 parties

Après avoir agité et filtré, on applique la dispersion sur une feuille de polycarbonate LEXAN® 8800 de 40 à 60 μm d'épaisseur, et on sèche pour obtenir une couche de 6 μm d'épaisseur à l'état sec. On applique un rectangle du film obtenu sur un empilement de feuilles de polycarbonate permettant d'obtenir une épaisseur de 600 μm, on fait quatre points de soudure aux ultrasons pour maintenir le sandwich en place, on applique le sandwich côté film magnétique sur une plaque de verre et on soude à une température comprise entre 160°C et 180°C, sous une pression de 100 à 1000 N/cm². On coupe une carte aux normes ISO (54 x 86 mm) et on détermine les propriétés magnétiques et mécanique de cette carte.

Le test électrique d'usure est mis en oeuvre sur une piste de 200 μm de large, à une vitesse d'enregistrement de 200 mm/s, et une fréquence de 14,6 kHz. (Ceci correspond à une densité de 1457 bits/cm). Le nombre de passages est de 2000.

Exemple 2

On prépare une dispersion magnétique contenant :

| Particules d'hexaferrite de Ba | 100,0 g |
| GAFAC® RE 610 | 3,0 g |
| Vinnol® 22/40 | 2,0 g |
| SiO$_2$ | 1,5 g |
| Al$_2$O$_3$ | 15,0 g |
| Noir de carbone | 3,0 g |
| Desmophen® 651 | 20,8 g |
| Desmodur® L | 27,2 g |
| Copolymère de polytétrafluoroéthylène/ polyéthylène (50/50) (dimension de particules égale ou inférieure à 3 μm) | 1,0 g |

On utilise comme solvant le mélange suivant, à raison de 53 parties de dispersion pour 47 parties de mélange de solvants :

| Acétate d'isopropyle | 55 |
| Nitroéthane | 15 |
| Dichloroéthane | 20 |
| Méthylisobutylcétone | 10 |

On prépare une carte comme à l'exemple précédent, et l'on met en oeuvre le test électrique d'usure dans les mêmes conditions qu'à l'exemple précédent.

Exemple 3

On prépare une dispersion magnétique contenant :

| Particules d'hexaferrite de baryum | 100 g |
| Ester d'acide polycarboxylique | 6 g |
| Vinnol® E22/40A | 1 g |
| SiO$_2$ | 2 g |
| Al$_2$O$_3$ | 15 g |
| Noir de carbone | 3 g |
| Desmophen® 651 | 21,4 g |
| Desmodur® L | 27,9 g |
| Polytétrafluoroéthylène/polyéthylène (50/50) (dimension de particules égale ou inférieure à 3 μm) | 1,5 g |

On utilise le mélange solvant suivant, à raison de 62 parties de dispersion pour 38 parties de mélange solvant :

| Acétate d'éthyle | 50 |
| Méthylisobutylcétone | 25 |
| Nitroéthane | 25 |

On prépare une carte comme à l'exemple 1 et l'on met en oeuvre le test électrique d'usure dans les mêmes conditions qu'à l'exemple 1.

7

Exemple 4

On prépare une dispersion magnétique contenant :

```
Particules d'hexaferrite de baryum          100 g
GAFAC® RE 610                                  3 g
Silicone Byk®-310                            0,1 g
Vinnol® E22/40A                              2,0 g
SiO                                          1,5 g
   2
Al O                                          15 g
  2 3
Noir de carbone                                3 g
Desmophen® 651                              20,2 g
Desmodur® L                                 27,5 g
Copolymère Polytétrafluoroéthylène/polyéthylène
(50/50) (dimension de particules égale ou inférieure
à 3 μm)                                      1,0 g
```

On utilise comme solvant le mélange suivant, à raison de 58 parties de dispersion pour 42 parties de mélange de solvants :

Cyclohexanone          22
Acétate d'éthyle        9
Méthyléthylcétone      60
Toluène                 9

On prépare une carte comme à l'exemple 1, et l'on met en oeuvre le test électrique d'usure dans les mêmes conditions, sauf que le nombre de passages est de 24 000.

Exemple 5

On prépare une dispersion magnétique contenant :

```
Particules d'hexaferrite de baryum          100 g

GAFAC® RE 610                               3,0 g
Lécithine                                   3,0 g
Silicone Byk®-310                           0,2 g
SiO                                          15 g
   2
Al O                                        1,5 g
  2 3
Vinnol® 22/40                                 2 g
Desmophen® 651                             20,5 g
Desmodur® L                                  28 g
Copolymère Polytétrafluoroéthylène/polyéthylène
(50/50) (dimension de particules égale ou inférieure
à 3 μm)                                     1,2 g
```

On utilise comme solvant le mélange suivant, à raison de 61 parties de dispersion pour 39 parties de mélange de solvants :

| Cyclohexanone | 20 |
|---|---|
| Acétate d'éthyle | 20 |
| Méthyléthylcétone | 38 |
| Toluène | 22 |

On prépare une carte comme à l'exemple 1, et l'on met en oeuvre le test électrique d'usure dans les mêmes conditions, sauf que le nombre de passages est de 24 000.

Exemple 6

On prépare une dispersion magnétique contenant :

| Particules d'hexaferrite de baryum | 100 g |
|---|---|
| Dextrol OC 70 vendu par Dexter | 2,0 g |
| Acide palmitique | 1,5 g |
| $SiO_2$ | 1,5 g |
| $Al_2O_3$ | 15 g |
| Vinnol® 22/40 | 1,5 g |
| Desmophen® 651 | 20,8 g |
| Desmodur® L | 28 g |
| Copolymère Polytétrafluoroéthylène/polyéthylène (50/50) (dimension de particules égale ou inférieure à 3 µm) | 1 g |
| Vydax® | 1 g |

On utilise comme solvant le mélange suivant, à raison de 55 parties de dispersion pour 45 parties de mélange de solvants :

| Cyclohexanone | 12 |
|---|---|
| Acétate d'éthyle | 25 |
| Méthyléthylcétone | 63 |

On prépare une carte comme à l'exemple 1, et on met en oeuvre le test électrique d'usure dans les mêmes conditions, sauf que le nombre de passages est de 24 000.

TABLEAU

| Mesures \ Exemples | 1 | 2 | 3 | 4 | 5 | 6 |
|---|---|---|---|---|---|---|
| **Magnétiques** | | | | | | |
| Champ coercitif Oe (kA/m) | 4650 (370) | 4850 (386) | 5000 (398) | 5000 (398) | 6000 (477) | 5700 (453) |
| SFD Oe (kA/m) | 2000 (159) | 2000 (159) | 1700 (135) | 1200 (95) | 1200 (95) | 1350 (107) |
| Im emu/cm³ | 82 | 86 | 69 | 89 | 91 | 99 |
| SFD/Hc | 0,43 | 0,41 | 0,34 | 0,24 | 0,20 | 0,24 |
| **Mécaniques** | | | | | | |
| Test électrique d'usure pour 2000 passages | < 1% | < 1% | < 1% | | | |
| pour 24 000 passages | | | | < 1% | < 1% | < 1% |
| Rugosité (nm) | 6,5 | 7,8 | 8,8 | 9 | 7,2 | 6,2 |
| Abrasivité (µm) | 510 | 425 | 510 | 400 | 480 | 400 |
| Résistance à la rayure (µm) | 1,25 | 0,85 | 1,25 | 0,37 | 0,93 | 0,67 |

**Revendications**

1. Milieu d'enregistrement magnétique comprenant des particules magnétiques et un liant formé d'un polyuréthanne tridimensionnel réticulé, caractérisé en ce que le polyuréthanne tridimensionnel réticulé est formé à partir d'un polyol ramifié comprenant au moins 8% en poids de groupes OH, ayant un poids moléculaire moyen inférieur à 4000, et d'un prépolymère d'isocyanate comprenant au moins 3 fonctions isocyanate.

2. Milieu d'enregistrement magnétique selon la revendication 1, dans lequel le polyol est un polyester-polyol.

3. Milieu d'enregistrement magnétique d'une quelconque des revendications 1 à 2, dans lequel les quantités de polyol et de prépolymère d'isocyanate constituant le polyuréthanne sont telles que le rapport NCO/OH total est supérieur à 0,9.

4.  Milieu d'enregistrement magnétique selon la revendication 3, dans lequel le rapport NCO/OH total est égal ou supérieur à 1.

5.  Milieu d'enregistrement magnétique d'une quelconque des revendications 1 à 4, comprenant en outre un lubrifiant solide sous forme de particules, au moins 90 % des particules ayant une dimension égale ou inférieure à 3 μm, présent à raison de moins de 2 % en masse par rapport à la masse des particules magnétiques.

6.  Milieu d'enregistrement magnétique selon la revendication 5, dans lequel au moins 99% des particules de lubrifiant solide ont une dimension égale ou inférieure à 3 μm.

7.  Milieu d'enregistrement magnétique selon l'une des revendications 5 ou 6, dans lequel les particules de lubrifiant solide sont des particules de polytétrafluoroéthylène.

8.  Milieu d'enregistrement magnétique selon la revendication 7, dans lequel le lubrifiant solide comprend en outre une polyoléfine.

9.  Milieu d'enregistrement magnétique d'une quelconque des revendications 1 à 8 dans lequel les particules magnétiques sont des particules d'oxyde de fer.

10. Milieu d'enregistrement magnétique d'une quelconque des revendications 1 à 8, dans lequel les particules magnétiques sont des particules de fer métallique.

11. Milieu d'enregistrement magnétique d'une quelconque des revendications 1 à 8, dans lequel les particules magnétiques sont des particules d'hexaferrites de baryum ou de strontium.

12. Milieu d'enregistrement magnétique de la revendication 11 dans lequel les particules d'hexaferrites de baryum ou de strontium ont un champ coercitif supérieur à 5000 Oe (400 kA/m), une aimantation à saturation supérieure à 60 emu/g et un rapport de la répartition des champs de commutation au champ coercitif inférieur à 0,40.

13. Milieu d'enregistrement magnétique d'une quelconque des revendications 1 à 12, qui ne comporte pas de surcouche et présente une usure correspondant à une perte de signal électrique égale ou inférieure à 5 % pour 2000 passages, une abrasivité inférieure à 600 μm et une résistance à la rayure inférieure à 1,5 μm.

14. Utilisation du milieu d'enregistrement magnétique conforme à l'une quelconque des revendications 1 à 13, dans un disque ou une carte pour enregistrement magnétique.

15. Utilisation du milieu d'enregistrement magnétique conforme à la revendication 13, dans une carte à mémoire magnétique à grande capacité.

**Patentansprüche**

1.  Magnetisches Aufzeichnungsmedium mit magnetischen Teilchen und einem Bindemittel, das aus einem quervernetzten dreidimensionalen Polyurethan gebildet wird, dadurch gekennzeichnet, daß das quervernetzte dreidimensionale Polyurethan gebildet wird aus einem verzweigten Polyol mit mindestens 8 Gew.-% OH-Gruppen mit einem durchschnittlichen Molekulargewicht von weniger als 4000 und einem Isocyanat-Vorpolymer mit mindestens 3 Isocyanat-Funktionen.

2.  Magnetisches Aufzeichnungsmedium nach Anspruch 1, in dem das Polyol ein Polyester-Polyol ist.

3.  Magnetisches Aufzeichnungsmedium nach Anspruch 1 oder 2, in dem die entsprechenden Mengen an Polyol und Isocyanat-Vorpolymer, die das Polyurethan bilden, derart sind, daß das NCO/OH-Gesamt-Verhältnis bei > 0,9 liegt.

4.  Magnetisches Aufzeichnungsmedium nach Anspruch 3, bei dem das NCO/OH-Gesamt-Verhältnis bei > 1 liegt.

5.	Magnetisches Aufzeichnungsmedium nach einem der Ansprüche 1 bis 4, weiterhin enthaltend ein teilchenförmiges festes Schmiermittel, wovon mindestens 90 % der Teilchen eine Größe von < 3 μm aufweisen, entsprechend weniger als 2 Gew.-%, bezogen auf das Gewicht der magnetischen Teilchen.

6.	Magnetisches Aufzeichnungsmedium nach Anspruch 5, in dem mindestens 99 % der festen Schmiermittelteilchen eine Größe von < 3 μm aufweisen.

7.	Magnetisches Aufzeichnungsmedium nach Anspruch 5 oder 6, in dem die festen Schmiermittelteilchen Polytetrafluoroethylenteilchen sind.

8.	Magnetisches Aufzeichnungsmedium nach Anspruch 7, in dem das feste Gleitmittel ferner ein Polyolefin umfaßt.

9.	Magnetisches Aufzeichnungsmedium nach einem der Ansprüche 1 bis 8, in dem die magnetischen Teilchen Eisenoxid-Teilchen sind.

10.	Magnetisches Aufzeichnungsmedium nach einem der Ansprüche 1 bis 8, in dem die magnetischen Teilchen metallische Eisen-Teilchen sind.

11.	Magnetisches Aufzeichnungsmedium nach einem der Ansprüche 1 bis 8, in dem die magnetischen Teilchen Barium- oder Strontiumhexaferrit-Teilchen sind.

12.	Magnetisches Aufzeichnungsmedium nach Anspruch 11, in dem die Barium- oder Strontiumhexaferrit-Teilchen ein Koerzitivfeld von größer als 5000 Oe (400 kA/m) aufweisen, eine Sättigungsmagnetisierung von größer als 60 emu/g und ein wechselndes Feldverteilungs-/Koerzitiv-Verhältnis von kleiner als 0,40.

13.	Magnetisches Aufzeichnungsmedium nach einem der Ansprüche 1 bis 12, das keine Deckschicht aufweist und einen Verschleißwiderstand entsprechend einem elektrischen Signalverlust von < 5 % bei 2000-maliger Verwendung aufweist, einen Abrieb von < 600 μm sowie einen Ritzwiderstand von < 1,5 μm.

14.	Verwendung des magnetischen Aufzeichnungsmediums nach einem der Ansprüche 1 bis 13 in einer magnetischen Aufzeichnungskarte oder Disc.

15.	Verwendung des magnetischen Aufzeichnungsmediums nach Anspruch 13 in einer Magnetkarte von hoher Kapazität.

## Claims

1.	Magnetic recording medium comprising magnetic particles, a binder formed of a crosslinked tridimensional polyurethane, characterized in that : the crosslinked tridimensional polyurethane is formed from a branched polyol comprising at least 8 % by weight of OH groups, having an average molecular weight less than 4,000 and an isocyanate prepolymer comprising at least 3 isocyanate functions.

2.	Magnetic recording medium according to claim 1, wherein the polyol is a polyester-polyol.

3.	Magnetic recording medium according to claim 1 or 2, wherein the respective amounts of polyol and isocyanate prepolymer forming the polyurethane are such that the NCO/OH total ratio is > 0.9.

4.	Magnetic recording medium according to claim 3, wherein the NCO/OH total ratio is > 1.

5.	Magnetic recording medium according to any of claims 1-4, further comprising a particulate solid lubricant, with at least 90 % of the particles having a size < 3 μm, representing less than 2 % by weight, based on the weight of magnetic particles.

6.	Magnetic recording medium according to claim 5, wherein at least 99 % of the solid lubricant particles have a size < 3 μm.

7.	Magnetic recording medium according to claim 5 or 6, wherein the solid lubricant particles are polyterafluoroethylene particles.

8. Magnetic recording medium according to claim 7, wherein the solid lubricant further comprises a polyolefin.

9. Magnetic recording medium according to any of claims 1-8, wherein the magnetic particles are iron oxide particles.

10. Magnetic recording medium according to any of claims 1-8, wherein the magnetic particles are metallic iron particles.

11. Magnetic recording medium according to any of claims 1-8, wherein the magnetic particles are barium or strontium hexaferrite particles.

12. Magnetic recording medium according to claim 11, wherein the barium or strontium hexaferrite particles exhibit a coercive field higher than 5000 Oe (400 kA/m), a saturation magnetization higher than 60 emu/g and a switching field distribution/coercive ratio less than 0.40.

13. Magnetic recording medium according to any of claims 1-12, said medium having no overcoat and exhibiting a wear corresponding to a electric signal loss < 5 % for 2000 uses, an abrasiveness < 600 $\mu$m and an scratch resistance < 1.5 $\mu$m.

14. Use of the magnetic recording medium according to any of claims 1-13 in a magnetic recording card or disc

15. Use of the magnetic recording medium according to claim 13, in a high capacity magnetic card.